Europäisches Patentamt

European Patent Office

Office européen des brevets

(19)

(11)    **EP 0 700 228 B1**

(12)    **FASCICULE DE BREVET EUROPEEN**

(45) Date de publication et mention
de la délivrance du brevet:
**19.12.2001   Bulletin 2001/51**

(51) Int Cl.⁷: **H04Q 7/34**, H04Q 7/20

(21) Numéro de dépôt: **95401994.9**

(22) Date de dépôt: **01.09.1995**

(54) **Procédé et équipement pour la détection de la dérive fréquentielle d'un oscillateur de station de base d'un réseau cellulaire de radiocommunications**

Verfahren und Einrichtung zur Erfassung der Frequenzdrift eines Basisstationoszillators für zellulares Funknetz

Method and apparatus for detecting the frequency drift of a base station oscillator in a cellular radiocommunications network

(84) Etats contractants désignés:
**AT BE CH DE DK ES GB IT LI NL SE**

(30) Priorité:  **05.09.1994  FR 9410616**

(43) Date de publication de la demande:
**06.03.1996   Bulletin 1996/10**

(73) Titulaire: **ALCATEL**
**75382 Paris Cédex 08 (FR)**

(72) Inventeur: **Dupuy, Pierre**
**F-75017 Paris (FR)**

(74) Mandataire: **El Manouni, Josiane et al**
**COMPAGNIE FINANCIERE ALCATEL Dépt.**
**Propr. Industrielle 30, avenue Kléber**
**75116 Paris (FR)**

(56) Documents cités:
**EP-A- 0 398 773          EP-A- 0 589 753**

• **MOBILE RADIO CONFERENCE, Novembre 1991**
**VALBONNE (FR), pages 51-55, XP 000391318 M.**
**MOULY ET AL 'THE**
**PSEUDO-SYNCHRONISATION, A COSTLESS**
**FEATURE TO OBTAIN THE GAINS OF A**
**SYNCHRONISED CELLULAR NETWORK'**

**Description**

La présente invention concerne de manière très générale des opérations de maintenance relatives à des oscillateurs de station de base dans un réseau cellulaire de radiocommunications avec des mobiles. L'invention a trait plus particulièrement à un procédé de détection de la dérive fréquentielle d'un oscillateur de station de base qui vise à optimiser ces opérations de maintenance.

Dans une station de base d'un réseau numérique de radiocommunications avec des mobiles, la transmission numérique sur voie radio est organisée en trames. Dans le cadre du G.S.M (Global System For Mobile Communications), chaque trame a une durée totale de 120/26 ms, soit 4,615 ms et comprend 8 intervalles de temps, ou fenêtres, de 0,577 ms définissant 156,25 temps-bit. Ces trames sont combinées en supertrames comprenant chacune 1326 trames et définissant une séquence de 6,12 s. Les supertrames sont associées en une hypertrame de 2 048 supertrames, soit une séquence de 3h 28mn 53s 760ms.

Une station de base utilise ces différents temps de trame, supertrame et hypertrame pour dérouler des séquences de programme. Par exemple, la trame définit le motif temporel élémentaire de transmission de canal, et l'hypertrame correspond au cycle de chiffrement. Un oscillateur dans la station de base est destiné à produire un signal d'horloge de référence temporelle pour les différentes opérations d'ouverture de fenêtre de trame, déroulement temporel des lois de saut de fréquence, etc... Il est prévu que ce signal d'horloge présente une stabilité de 0,05 ppm (Partie Par Million), soit un écart fréquentiel maximal de $\pm(0,05/10^6).F$ autour de la fréquence nominale F de l'oscillateur.

Selon la technique antérieure, des opérations de maintenance préventive périodiques sont prévues pour vérifier que la dérive fréquentielle d'un oscillateur de part ou d'autre de la fréquence nominale n'a pas amené la fréquence courante de l'oscillateur en dehors de la plage $[F-(0,05/10^6).F, F+(0,05/10^6).F]$. Ces opérations de maintenance préventive sont coûteuses car elles nécessitent l'intervention sur site d'un agent qualifié. Par ailleurs, en raison de leur périodicité, elles ne permettent pas de détecter au plus tôt la dérive fréquentielle d'un oscillateur.

L'invention vise à remédier aux inconvénients précités selon la technique antérieure en fournissant un procédé de détection de la dérive fréquentielle d'un oscillateur dans une station de base. Ce procédé supprime toute opération de maintenance préventive en limitant le rôle des agents à des seules interventions inévitables de réglage ou échange. standard. L'avantage économique qui en résulte est évident.. En outre, la détection de la dérive fréquentielle d'un oscillateur est sensiblement immédiate, et n'est pas reportée jusqu'à une prochaine intervention préventive d'un agent sur cet oscillateur. En conséquence, la dérive excessive d'un oscillateur est évitée puisque une telle dérive est immédiatement détectée.

A cette fin, un procédé selon l'invention de détection de la dérive fréquentielle entre des premier et second oscillateurs respectivement associés à des premier et second émetteurs radioélectriques, est caractérisé en ce qu'il comprend les étapes de :

- calcul de la différence entre une première référence temporelle du premier oscillateur et une seconde référence temporelle du second oscillateur, pour chacun d'au moins deux instants successifs, en fonction, d'une part, d'une différence observée par un relais entre les première et seconde références temporelles respectivement émises par les premier et second émetteurs, et, d'autre part, des temps de propagation respectifs entre ledit relais et les premier et second émetteur, lesdits premier et second émetteurs formant ensemble un premier couple d'émetteurs,
- détermination de la variation par unité de temps de la différence de références temporelles calculée, et
- détection de la dérive fréquentielle entre lesdits premier et second oscillateurs, en réponse à une variation par unité de temps de la différence de références temporelles calculée qui est supérieure à un seuil prédéterminé.

En variante, le procédé est caractérisé par une étape de sélection de l'un parmi les deux oscillateurs qui présente la dérive fréquentielle en fonction de la variation par unité de temps de la différence de références temporelles déterminée pour au moins un autre couple de stations de base distincts dudit premier couple et comprenant l'un desdits premier et second émetteurs.

Selon la réalisation préférée, les premier et second émetteurs radioélectriques sont respectivement des première et seconde stations de base dans un réseau cellulaire de radiocommunications avec des mobiles, et le relais est un mobile dans ledit réseau.

Selon cette réalisation, il est prévue la transmission par ledit mobile à destination de la seconde station de base lors d'un changement de cellule, d'une information ayant pour valeur le résultat de l'addition, d'une part, de la différence de références temporelles entre première et seconde stations de base telle qu'observée par le mobile, et, d'autre part, du temps de propagation entre le mobile et la première station de base. Par ailleurs, l'étape de calcul de la différence de références temporelles consiste à soustraire le temps de propagation entre le mobile et la seconde station de base à ladite information transmise par le mobile à destination de la seconde station de base.

L'invention fournit également un équipement d'infrastructure pour la mise en oeuvre de l'invention. Il comprend des moyens pour recevoir en provenance d'un couple de stations de base, des messages incluant chacun une valeur de différence de références temporelles calculée, des moyens pour mémoriser pour ce couple de stations lesdites valeurs de différence de références temporelles calculées à des instants successifs, et des moyens de traitement pour déterminer la variation par unité de temps de la différence de références temporelles, et détecter la dérive fréquentielle d'un oscillateur en réponse à une variation supérieure à un seuil prédéterminé. Cet équipement peut comprendre, en outre, des moyens pour sélectionner l'un parmi les deux oscillateurs qui présente la dérive fréquentielle en fonction de la variation par unité de temps de la différence de références temporelles qui est déterminée pour au moins un autre couple de stations de base distincts dudit premier couple et comprenant l'un desdits premier et second émetteurs.

D'autres caractéristiques et avantages de la présente invention apparaîtront plus clairement à la lecture de la description suivante de plusieurs réalisations préférées en référence aux dessins annexés correspondants, dans lesquels:

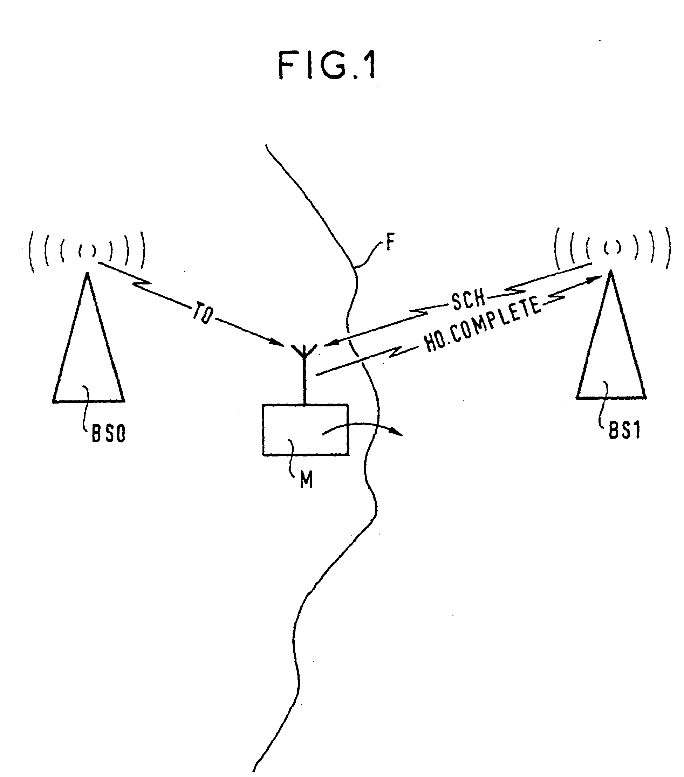

- la figure 1 illustre de manière schématique un changement de cellule d'un mobile dans un réseau cellulaire de radiocommunications avec des mobiles, et des échanges de messages entre mobile et stations de base source et cible impliquées dans ce changement de cellule; et

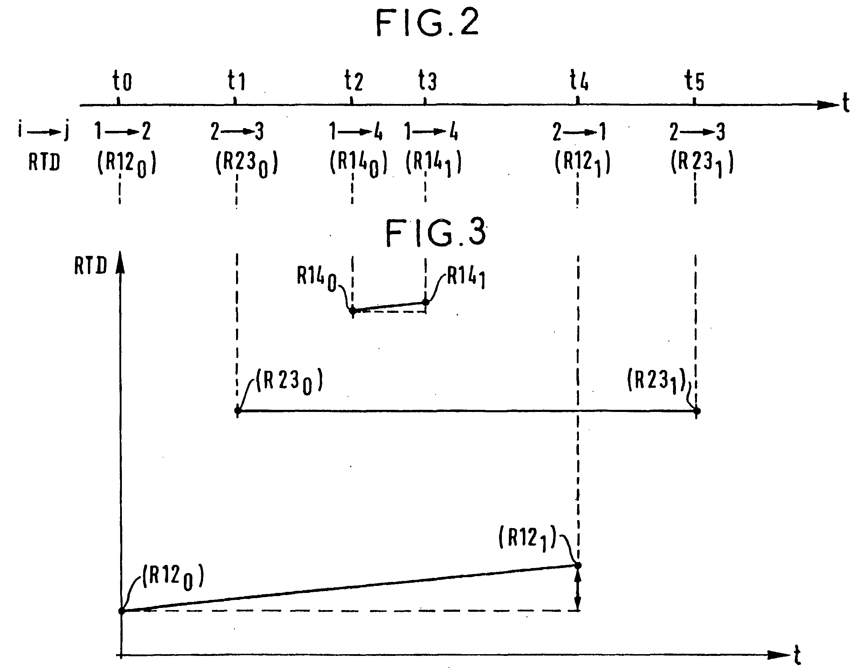

- les figures 2 et 3 montrent respectivement un diagramme temporel d'instants de changement de cellule, et un diagramme cartésien associé représentant l'évolution au cours du temps de trois différences de références temporelles respectivement associées à trois couples de stations de base, afin d'expliquer la mise en oeuvre du procédé selon l'invention.

L'invention est destinée notamment à être mise en oeuvre dans le G.S.M. qui prévoit, en référence à l'annexe A de la Recommandation G.S.M - 05.10, version 4.0.0 (Février 1992), publiée par l'ETSI, qu'un mobile joue le rôle d'un "relais" de transmission d'informations de synchronisation entre deux stations de base, dites station de base source et station de base cible, lors d'un changement de cellule dudit mobile. Le terme "handover" est couramment employé en terminologie anglo-saxonne pour désigner un changement de cellule.

Cette fonction de relais de transmission d'informations de synchronisation entre stations de base source et cible que met en oeuvre le mobile est maintenant expliquée en référence à la figure 1. Lorsqu'un mobile M traverse une frontière fictive F séparant deux cellules adjacentes dans un réseau cellulaire de radiocommunications avec des mobiles, une procédure de changement de cellule est déclenchée et consiste à commuter la communication établie avec le mobile M à partir d'un premier canal duplex associé à la station de base source BS0 vers un second canal duplex associé à la station de base cible BS1. La procédure de changement de cellule se caractérise par des échanges de messages prédéterminés entre les stations de base source ou cible d'une part, et le mobile d'autre part. Cette procédure consiste, en outre, à établir la synchronisation du mobile avec la station de base cible BS1 dont la référence temporelle diffère de celle de la station source BS0 avec laquelle le mobile est synchronisé. La procédure de changement de cellule d'un mobile et les étapes y afférents sont décrits dans la demande de brevet européen EP-A-0 398 773.

Notre attention sera portée uniquement sur une phase finale du changement de cellule qui est utile à la compréhension de l'invention. La différence de références temporelles telle qu'observée par le mobile, notée OTD pour Observed Time Difference en terminologie anglo-saxonne, entre les station de base source BSO et station de base cible BS1, est définie par :

$$OTD = RTD + T1 - T0 \qquad (1)$$

où RTD désigne la différence de références temporelles réelle (Real Time Difference) entre les stations de base source et cible, ou différence de références temporelles, et T0 et T1 dénotent respectivement les temps de propagation entre le mobile M et la station de base source BSO, et le mobile M et la station de base cible BS1.

Périodiquement, typiquement à une fréquence de deux fois par seconde dans le GSM, le mobile M reçoit en provenance de la station de base source BSO, l'information d'avance temporelle T0 qui autorise un ajustement d'avance temporelle de l'horloge du mobile relativement à une première référence temporelle qu'il a reçu de cette station BS0 à l'établissement de la communication, en tenant compte du temps de propagation mobile-station de base source. Cette première référence temporelle est véhiculée dans le sous-canal SCH (Synchronisation CHannel) du canal BCCH (BroadCast CHannel) dans le G.S.M. sous la forme d'un message définissant le rang dans l'hypertrame de la trame qui véhicule ledit message. En outre, lorsque le mobile M est en communication avec ladite station de base source BS0, il se pré-synchronise avec chaque station de base avoisinante vers laquelle il est susceptible d'être transféré par handover. Cette pré-synchronisation est obtenue par réception par le mobile d'une seconde référence temporelle émise par chaque station avoisinante dans un sous-canal SCH. Le mobile M est donc apte à calculer la valeur (OTD + T0). OTD est définie comme la différence des première et seconde références temporelles, telles que reçues par le mobile M avec des retards de propagation respectifs.

La Recommandation GSM-05.10 à laquelle il a été. fait référence précédemment précise que le mobile émet à destination de la station de base cible BS1, en fin de procédure de handover dans un message "H.

0 COMPLETE", cette information (OTD + T0). De plus, en cours de procédure de handover, un message "H.0 ACCESS" est émis par le mobile M à destination de la station cible BS1 en synchronisme avec la seconde référence temporelle reçue en provenance de la station de base cible BS1. En réponse à la réception du message "H.O ACCESS" par la station cible BS1, cette dernière calcule l'avance temporelle, ou temps de propagation entre le mobile M et elle-même, qu'elle transmet au mobile M dans un message "PHYSICAL INFO", afin que le mobile ajuste son horloge relativement à la référence temporelle de la station BS1, en tenant compte du temps T1 de propagation mobile-station BS1, et puisse valablement ouvrir des fenêtres temporelles de réception et d'émission synchronisées avec la station BS1.

Ainsi, en fin de procédure de changement de cellule, la station de base cible BS1 est en possession des informations (OTD+T0) et T1. Selon l'équation (1) donnée précédemment, ces informations (OTD + T0) et T1 autorisent le calcul de la différence de références temporelles entre la station de base source BSO et la station de base cible BS1 impliquées dans le handover.

En référence aux figures 2 et 3, il est maintenant expliqué la mise en oeuvre du procédé selon l'invention. Le procédé utilise avantageusement la caractéristique selon laquelle une station de base qui opère comme station de base cible dans un changement de cellule dispose des valeurs (OTD + T0) et T1 qui sont nécessaires au calcul de la différence de références temporelles RTD entre elle-même et une station de base source BS0.

Dans la figure 2, à six instants successifs notés t0, t1, t2, t3, t4 et t5, chacun portés par l'axe temporel t, sont respectivement associés six changements de cellule entre différentes cellules associées à des stations de base respectives notées 1, 2, 3 et 4. A gauche dans cette figure 2, la légende associe à la station de base source le repère i, et à la station de base cible le repère j. R désigne la différence de références temporelles réèlle (RTD) entre les station de base source et station de base cible, calculée par la station cible pour chacun de ces changements de cellule. Ainsi, à titre d'exemple, à l'instant t2 est opéré un changement de cellule de la cellule associée à la station 1 vers la cellule associée à la station 4, et la différence de références temporelles calculée est notée $R14_0$. L'homme du métier appréciera que le calcul de la différence de références temporelles réèlle RTD est symétrique, ce qui signifie qu'à un instant donné, deux mêmes calculs sont obtenus si l'on inverse les rôles respectifs, source et cible, joués par chacune des deux stations de base impliquées dans le handover.

Dans la figure 3 est représentée, en connexion avec la figure 2, l'évolution au cours du temps t de la différence de références temporelles réèlle RTD pour chacun de trois couples (1, 2), (2, 3) et (4, 5) de stations de base entre lesquelles s'opèrent des changements de cellules. Une première analyse des résultats schématisés dans cette figure 3 conduit à établir que l'une parmi les deux stations de base 1 et 2 comprend un oscillateur qui présente une dérive fréquentielle par rapport à l'oscillateur dans l'autre desdites stations. Cette analyse consiste, pour chaque couple de stations de base, en la détermination de la variation par unité de temps de la différence de références temporelles réelle entre les deux stations. Cette variation par unité de temps s'écrit $[(R12_1 - R12_0)/(t4-t0)]$ pour le couple de stations (1, 2) pour les instants t0 et t4. Dans la figure 3, par exemple, un oscillateur de l'une des stations du couple de stations (1, 2) présente une dérive fréquentielle. Il est impossible à ce stade de connaître laquelle des deux stations 1 ou 2 présente la dérive fréquentielle. Néanmoins, une analyse plus approfondie nous amène à constater que seule la station 1 présente une dérive fréquentielle relativement aux autres stations. En effet, seules les stations de base 1 et 4 dans le couple de stations (1, 4) présentent également entr'elles une dérive fréquentielle. Par contre, les stations 2 et 3 dans le couple (2, 3) ne présentant aucune dérive fréquentielle entr'elles. La station 1 appartient aux deux couples (1, 2) et (1, 4).

En résultat de ce qui précède, deux variantes peuvent être prévues selon l'invention pour établir la dérive fréquentielle d'un oscillateur dans une station de base.

Selon une première variante, la détection d'un oscillateur présentant une dérive fréquentielle est obtenue séparément pour chaque couple de première et seconde stations de base (i, j) entre lesquelles s'opèrent des changements de cellule. Pour chacun d'au moins deux instants successifs et en fonction, d'une part, d'une différence OTD observée par un mobile entre les première et seconde références temporelles respectivement émises par les première et seconde stations de base, et, d'autre part, des temps de propagation respectifs entre ledit mobile M et les première et seconde stations, cette variante comprend une première étape de calcul de la différence entre une première référence temporelle d'un premier oscillateur dans la première station de base et une seconde référence temporelle d'un second oscillateur dans la seconde station de base. L'information OTD est transmise par deux mobiles M a priori distincts lors de deux handovers successifs entre les stations i et j auxdits deux instants. Cette étape de calcul est suivie par une étape de détermination de la variation par unité de temps de cette différence de références temporelles. Une variation par unité de temps de la différence de références temporelles qui est supérieure à un seuil prédéterminé permet de détecter que l'un desdits deux oscillateurs respectifs desdites première et seconde stations de base présente une dérive fréquentielle trop élevée, une indétermination résidant dans la sélection de l'un parmi les deux oscillateurs qui présente la dérive fréquentielle.

La seconde variante de l'invention lève cette indétermination. Elle prévoit pour cela, en addition des étapes précitées, une étape de sélection de l'un parmi les deux oscillateurs du couple de stations de base (i,j) qui présente la dérive fréquentielle, en fonction de la variation par unité de temps de la différence de références temporelles qui est déterminée pour au moins un couple de stations de basé distinct du couple concerné et comprenant l'une desdites première et seconde stations de base. Cette étape de sélection vise à lever l'indétermination à savoir laquelle des deux stations du couple (i, j) comprend un oscillateur qui nécessité un réglage. Ainsi, à titre d'exemple, si les stations de base i et j' dans un couple de stations (i, j') présentent entr'elles une dérive fréquentielle, alors la station i est sélectionnée comme comprenant un oscillateur pour lequel doit être prévue une intervention de réglage. De même, si les stations i' et j dans un couple (i', j) ne présentent aucune dérive fréquentielle entr'elles ou une dérive moindre, la station i est sélectionnée comme comprenant un oscillateur nécessitant une intervention de réglage puisque la station j ne présente à priori aucune dérive fréquentielle.

Selon une variante plus performante, il conviendra d'étudier à la fois le couple de stations (i, j') et le couple de stations (i', j). Ainsi, si les stations de base i et j' dans un couple de stations (i, j') présentent entr'elles une dérive fréquentielle, et que les stations i' et j dans le couple (i', j) ne présentent aucune dérive fréquentielle entr'elles ou une dérive moindre, la station i est sélectionnée comme comprenant un oscillateur nécessitant une intervention de réglage.

Dans le réseau mobile, ou infrastructure, il peut être prévu un équipement d'infrastructure pour la mise en oeuvre du procédé de l'invention.

Cet équipement d'infrastructure comprend alors des moyens pour recevoir en provenance d'un couple de stations de base, opérant en stations de base cibles, des messages incluant chacun une valeur calculée RTD de différence de références temporelles entre stations de base source et cible, et le couple (i, j) de stations de base source et cible associé à cette valeur calculée RTD. L'équipement comprend également une mémoire destinée à mémoriser pour chaque couple de cellules, ou stations de base, entre lesquelles se produisent des handovers, un ensemble de valeurs calculées de différences de références temporelles entre stations. Sont en outre prévus des moyens de traitement pour déterminer la variation par unité de temps de la différence de références temporelles pour chaque couple de stations de base, et détecter la dérive fréquentielle d'un oscillateur en réponse à une variation supérieure à un seuil prédéterminé. Pour la mise en oeuvre de la seconde variante du procédé de l'invention, ces moyens de traitement sélectionnent l'un parmi les deux oscillateurs qui présente la dérive fréquentielle en fonction de la variation par unité de temps de la différence de références temporelles déterminée pour au moins deux couples de cellules de stations de base comprenant chacun l'une respective des stations de base dudit chaque couple.

L'homme du métier conviendra que l'invention n'est pas limité à un réseau céllulaire de radiocommunications avec des mobiles, et que dans la description qui précède, des émetteurs radioélectriques incluant des oscillateurs respectifs peuvent remplacés les stations de base, et le mobile peut être un relais de transmission quelconque.

**Revendications**

1. Procédé de détection de la dérive fréquentielle entre des premier et second oscillateurs respectivement associés à des premier et second émetteurs radioélectriques, **caractérisé en ce qu'**il comprend les étapes de :

   - calcul de la différence (RTD = $R12_0$, $R12_1$) entre une première référence temporelle du premier oscillateur et une seconde référence temporelle du second oscillateur, pour chacun d'au moins deux instants successifs (t0, t4), en fonction, d'une part, d'une différence (OTD) observée par un relais entre les première et seconde références temporelles respectivement émises par les premier et second émetteurs, et, d'autre part, des temps de propagation respectifs entre ledit relais (M) et les premier et second émetteur, lesdits premier et second émetteurs formant ensemble un premier couple d'émetteurs,
   - détermination de la variation par unité de temps ($R12_1$-$R12_0$/(t4-$t_0$)) de la différence de références temporelles calculée ($R12_0$, $R12_1$), et
   - détection de la dérive fréquentielle entre lesdits premier et second oscillateurs, en réponse à une variation par unité de temps de la différence de références temporelles calculée qui est supérieure à un seuil prédéterminé.

2. Procédé conforme à la revendication 1, **caractérisé par** la sélection de l'un parmi les deux oscillateurs qui présente la dérive fréquentielle en fonction de la variation par unité de temps de la différence de références temporelles déterminée pour au moins un autre couple de stations de base distincts dudit premier couple et comprenant l'un desdits premier et second émetteurs.

3. Procédé conforme à l'une quelconque des revendications 1 ou 2, **caractérisé en ce que** lesdits premier et second émetteurs radioélectriques sont respectivement des première et seconde stations de base dans un réseau cellulaire de radiocommunications avec des mobiles, et le relais est un mobile (M) dans ledit réseau.

4. Procédé conforme à la revendication 3, **caractérisé par** la transmission par ledit mobile (M) à destination de la seconde station de base lors d'un changement de cellule, d'une information ayant pour valeur le résultat de l'addition, d'une part, de la différence de références temporelles entre première et seconde stations de base telle qu'observée par le mobile (OTD), et, d'autre part, du temps de propagation (T0) entre le mobile (M) et la première station de base.

5. Procédé conforme à la revendication 4, **caractérisé en ce que** ladite étape de calcul de la différence de références temporelles consiste à soustraire le temps de propagation (T1) entre le mobile et la seconde station de base (BS1) à ladite information (OTD + T0) transmise par le mobile (M) à destination de la seconde station de base (BS1).

6. Equipement d'infrastructure pour la mise en oeuvre du procédé conforme à la revendication 1, **caractérisé en ce qu'**il comprend

des moyens pour recevoir en provenance d'un couple de stations de base, des messages incluant chacun une valeur de différence de références temporelles calculée (RTD), des moyens pour mémoriser pour ce couple de stations lesdites valeurs de différence de références temporelles calculées à des instants successifs, et des moyens de traitement pour déterminer la variation par unité de temps de la différence de références temporelles, et détecter la dérive fréquentielle d'un oscillateur en réponse à une variation supérieure à un seuil prédéterminé.

7. Equipement d'infrastructure conforme à la revendication 6, pour la mise en oeuvre du procédé conforme à la revendication 2, **caractérisé en ce qu'**il comprend, en outre, des moyens pour sélectionner l'un parmi les deux oscillateurs qui présente la dérive fréquentielle en fonction de la variation par unité de temps de la différence de références temporelles qui est déterminée pour au moins un autre couple de stations de base distincts dudit premier couple et comprenant l'un desdits premier et second émetteurs.

**Patentansprüche**

1. Verfahren zur Erfassung der Frequenzdrift zwischen einem ersten und einem zweiten Oszillator, die mit einem ersten bzw. einem zweiten Funksender verbunden sind, **dadurch gekennzeichnet, dass** es die folgenden Schritte umfasst:

- Berechnung der Differenz (RTD = $Rl2_0$, $R12_1$) zwischen einem ersten Zeitbezugspunkt des ersten Oszillators und einem zweiten Zeitbezugspunkt des zweiten Oszillators für jeden von wenigstens zwei aufeinander folgenden Zeitpunkten (t0, t4) einerseits in Abhängigkeit von einer Differenz (OTD), die von einer Relaisstation zwischen dem ersten und dem zweiten Zeitbezugspunkt beobachtet wird, die vom ersten bzw. zweiten Sender gesendet werden, und andererseits in Abhängigkeit von der jeweiligen Laufzeit zwischen der genannten Relaisstation (M) und dem ersten bzw. zweiten Sender, wobei der erste und zweite Sender ein erstes Senderpaar bilden,
- Ermittlung der Veränderung der berechneten Differenz der Zeitbezugspunkte ($R12_0$, $R12_1$) pro Zeiteinheit (($R22_1$-$R12_0$) / (t4-t0)), und
- Erfassung der Frequenzdrift zwischen dem ersten und zweiten Oszillator in Antwort auf eine Veränderung der berechneten Differenz der Zeitbezugspunkte pro Zeiteinheit, die größer als eine vorher bestimmte Schwelle ist.

2. Verfahren nach Anspruch 1, **gekennzeichnet durch** die Auswahl desjenigen der beiden Oszillatoren, der die Frequenzdrift in Abhängigkeit von der Veränderung der Differenz der Zeitbezugspunkte pro Zeiteinheit aufweist, die für wenigstens ein weiteres Paar von Basisstationen ermittelt wird, die vom ersten Paar verschieden sind und entweder den ersten oder den zweiten Sender umfassen.

3. Verfahren nach einem der Ansprüche 1 oder 2, **dadurch gekennzeichnet, dass** der erste und der zweite Funksender eine erste bzw. eine zweite Basisstation in einem zellulären Funknetz mit Mobilgeräten sind, wobei die Relaisstation ein Mobilgerät (M) im Netz ist.

4. Verfahren nach Anspruch 3, **dadurch gekennzeichnet, dass** das genannte Mobilgerät (M) bei einem Zellenwechsel eine Information zur zweite Basisstation überträgt, deren Wert das Ergebnis der Addition einerseits der Differenz (OTD) der Zeitbezugspunkte zwischen der ersten und zweiten Basisstation, wie sie vom Mobilgerät beobachtet wird, und andererseits der Laufzeit (T0) zwischen dem Mobilgerät (M) und der ersten Basisstation ist.

5. Verfahren nach Anspruch 4, **dadurch gekennzeichnet, dass** der Berechnungsschritt für die Differenz der Zeitbezugspunkte darin besteht, die Laufzeit (T1) zwischen dem Mobilgerät und der zweiten Basisstation (BS1) von der Information (OTD + T0) zu subtrahieren, die vom Mobilgerät (M) zur zweiten Basisstation (BS1) übertragen wurde.

6. Infrastrukturgerät für die Durchführung des Verfahrens nach Anspruch 1, **dadurch gekennzeichnet, dass** es umfasst:

Mittel zum Empfangen von von einem Basisstationenpaar stammenden Nachrichten, die jeweils einen berechneten Wert der Differenz der Zeitbezugspunkte (RTD) beinhalten,
Mittel zum Speichern der Werte der Differenz der Zeitbezugspunkte für dieses Basisstationenpaar, die zu zwei aufeinander folgenden Zeitpunkten berechnet wurden, und
Verarbeitungsmittel zum Ermitteln der Veränderung der Differenz der Zeitbezugswerte pro Zeiteinheit und zum Erfassen der Frequenzdrift eines Oszillators in Antwort auf eine Veränderung, die größer als eine vorher bestimmte Schwelle ist.

**7.** Infrastrukturgerät nach Anspruch 6 zur Durchführung des Verfahrens nach Anspruch 2, **dadurch gekennzeichnet, dass** es außerdem Mittel zum Auswählen desjenigen der beiden Oszillatoren umfasst, der die Frequenzdrift in Abhängigkeit von der Veränderung der Differenz der Zeitbezugspunkte pro Zeiteinheit aufweist, die für wenigstens ein weiteres Paar von Basisstationen ermittelt wird, die vom genannten ersten Paar verschieden sind und entweder den ersten oder den zweiten Sender umfassen.

**Claims**

**1.** A method of detecting the frequency drift between first and second oscillators respectively associated with first and second radio transmitters, the method being **characterized in that** it comprises the steps of:

- calculating, for each of at least two successive instants (t0, t4), the difference ($RTD = R12_0$, $R12_1$) between a first time reference of the first oscillator and a second time reference of the second oscillator as a function firstly of a difference (OTD) observed by a relay between the first and second time references transmitted by the first and second transmitters respectively and secondly of respective propagation times between said relay (M) and the first and second transmitters, said first and second transmitters together forming a first pair of transmitters;
- determining the variation per unit time (($R12_1$-$R12_0$)/(t4-t0)) in the calculated time reference difference ($R12_0$, $R12_1$); and
- detecting the frequency drift between said first and second oscillators in response to a variation per unit time in the calculated time reference difference which is greater than a predetermined threshold.

**2.** A method according to claim 1, **characterized by** selecting that one of the two oscillators which presents determined frequency drift as a function of variation per unit time of the time reference difference for at least one other pair of base stations distinct from said first pair and including one of said first and second transmitters.

**3.** A method according to claim 1 or claim 2, **characterized in that** said first and second radio transmitters are respectively first and second base stations in a cellular network for radio communication with mobile stations, and the relay is a mobile station (M) in said network.

**4.** A method according to claim 3, **characterized by** said mobile station (M) transmitting information to the second base station during cell handover, the value of said information being the result of summing the time reference difference between the first and second base stations as observed by the mobile station (OTD) with the propagation time (T0) between the mobile station (M) and the first base station.

**5.** A method according to claim 4, **characterized in that** said step of calculating the time reference difference consists in subtracting the propagation time (T1) between the mobile station and the second base station (BS1) from said information (OTD + T0) transmitted by the mobile station (M) to the second base station (BS1).

**6.** Infrastructure equipment for implementing the method of claim 1, the equipment being **characterized in that** it comprises:

- means for receiving messages from a pair of base stations, each message including a calculated time reference difference value (RTD);
- means for storing said time reference difference values for said pair of stations as calculated at successive instants; and
- processor means for determining the variation per unit time in the time reference difference and for detecting the frequency drift of an oscillator in response to variation above a predetermined threshold.

**7.** Infrastructure equipment according to claim 6, for implementing the method according to claim 2, **characterized in that** it further comprises means for selecting that one of the two oscillators which present the frequency drift as a function of variation per unit time of the time reference difference which is determined for at least one other pair of base stations distinct from said first pair and comprising one of said first and second transmitters.

# FIG.1

# FIG.2

| | t0 | t1 | t2 | t3 | t4 | t5 |
|---|---|---|---|---|---|---|

$i \longrightarrow j$     $1 \longrightarrow 2$    $2 \longrightarrow 3$    $1 \longrightarrow 4$   $1 \longrightarrow 4$    $2 \longrightarrow 1$    $2 \longrightarrow 3$

RTD    $(R12_0)$    $(R23_0)$    $(R14_0)$   $(R14_1)$    $(R12_1)$    $(R23_1)$

# FIG.3

RTD

$R14_0$    $R14_1$

$(R23_0)$    $(R23_1)$

$(R12_1)$

$(R12_0)$

t

EP 0 700 228 B1